# EUROPÄISCHE PATENTSCHRIFT

(11) **EP 2 764 227 B1**
(45) Veröffentlichungstag und Bekanntmachung des Hinweises auf die Patenterteilung: **20.01.2016**
(21) Anmeldenummer: 12798631.3
(22) Anmeldetag: 15.11.2012
(51) Int. Cl.: F02C 3/28, F02C 9/40, F02C 3/22

(54) **VERFAHREN ZUM STABILISIEREN EINER NETZFREQUENZ MIT EINER GASTURBINE IM BRENNSTOFFMISCHBETRIEB**
METHOD FOR STABILISING A NETWORK FREQUENCY WITH A GAS TURBINE IN MIXED-FUEL OPERATION
PROCÉDÉ POUR LA STABILISATION D'UNE FRÉQUENCE DE RÉSEAU PRÉSENTANT UNE TURBINE À GAZ DANS UN FONCTIONNEMENT À CARBURANT MIXTE

(30) Priorität: 14.12.2011 DE 102011088524
(43) Veröffentlichungstag der Anmeldung: 13.08.2014
(73) Patentinhaber: Siemens Aktiengesellschaft, 80333 München (DE)
(72) Erfinder: HEILOS, Andreas, 45479 Mülheim an der Ruhr (DE); HESSE, Holger, 13629 Berlin (DE); SCHÄFER, Marc, 45470 Mülheim an der Ruhr (DE)
(86) Internationale Anmeldenummer: PCT/EP2012/072741
(87) Internationale Veröffentlichungsnummer: WO 2013/087347

(56) Entgegenhaltungen:
- EP-A2- 2 333 280
- EP-A2- 2 341 232
- CH-B1- 701 936
- US-A1- 2007 271 929

## Beschreibung

Die Erfindung betrifft ein Verfahren zum Stabilisieren einer Netzfrequenz mit einer Gasturbine im Brennstoffmischbetrieb im (Misch-)Betrieb mit Synthesegas. Hierzu offenbart das Dokument CH701936 B1 ein Verfahren gemäß Oberbegriff des Anspruchs 1. Bisher ist es nicht möglich Synthesegas-betriebene Gasturbinen zur Frequenzstützung zu verwenden.

Aufgabe der Erfindung ist es daher, ein Verfahren anzugeben, mit dem auch Gasturbinen mit Mischbetrieb an der Stabilisierung der Netzfrequenz teilnehmen können.

Die Erfindung löst diese Aufgabe indem sie vorsieht, dass bei einem derartigen Verfahren zum Stabilisieren einer Netzfrequenz mit einer Gasturbine, die mit Synthesegas und einem weiteren Brennstoff betreibbar ist, wobei der für den Betrieb der Gasturbine bereitgestellte Massenstrom des weiteren Brennstoffs schneller erhöht werden kann, als der des Synthesegases, zu einer Stabilisierung einer Netzfrequenz ein Verhältnis der Massenströme von Synthesegas zum weiterem Brennstoff für den Betrieb der Gasturbine verändert wird, indem der Massenstrom des weiteren Brennstoffs verändert wird und der Massenstrom des Synthesegases gleich bleibt.

Während die erzeugte Synthesegasmenge aufgrund von verfahrenstechnischen Einschränkungen der Vergaser nicht schnell genug geändert werden kann, um für Frequenzstützung interessante Leistungsgradienten fahren zu können, lässt sich die Sekundärbrennstoffmenge gewöhnlich schnell erhöhen oder verringern.

Anstatt wie bisher den Brennstoffsplit konstant zu halten und die Mengen aller beteiligten Brennstoffe gleichmäßig zu erhöhen oder vermindern, soll nun die Synthesegasmenge konstant bleiben und die Leistungsvariation durch schnelle Erhöhung oder Erniedrigung des Sekundärbrennstoffmassenstroms alleine erreicht werden.

Es ist vorteilhaft, wenn als weiterer Brennstoff Erdgas verbrannt wird.

Alternativ kann es vorteilhaft sein, wenn als weiterer Brennstoff Heizöl verbrannt wird.

Mit dem Verfahren gemäß der Erfindung ist Frequenzstützung jetzt auch bei mit Synthesegas-befeuerten Gasturbinen möglich. Die Synthesegasmenge wird vom Betreiber der Anlage fest vorgegeben, während die Menge des Zweitbrennstoffs entsprechend der vom Netz geforderten Leistung angepasst wird.

Die Erfindung wird beispielhaft anhand der Zeichnungen näher erläutert. Es zeigen schematisch und nicht maßstäblich:
- Figur 1: eine Leistungsanforderung aus dem elektrischen Netz und
- Figur 2: die Modulation des Brennstoffmassenstroms des Zweitbrennstoffs, um den Netzanforderungen zu folgen bei gleich bleibender Synthesegasmenge.

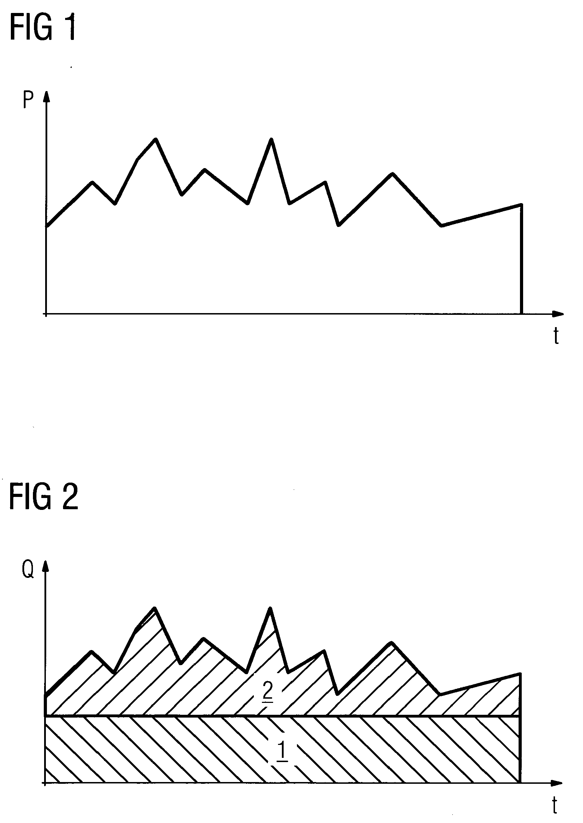

Die Figur 1 zeigt beispielhaft eine Leistungsanforderung aus dem elektrischen Netz über der Zeit und Figur 2 die entsprechenden Brennstoffmassenströme. Erfindungsgemäß bleibt der Synthesegasmassenstrom 1 unabhängig von der Leistungsanforderung konstant und der Zweitbrennstoffmassenstrom 2 folgt der Änderung der Leistungsanforderung aus dem elektrischen Netz.

## Patentansprüche

1. Verfahren zum Stabilisieren einer Netzfrequenz mit einer Gasturbine, die mit Synthesegas (1) und einem weiteren Brennstoff (2) betreibbar ist, wobei der für den Betrieb der Gasturbine bereitgestellte Massenstrom des weiteren Brennstoffs (2) schneller erhöht werden kann, als der des Synthesegases (1), **dadurch gekennzeichnet, dass** zu einer Stabilisierung einer Netzfrequenz ein Verhältnis der Massenströme von Synthesegas (1) zum weiterem Brennstoff (2) für den Betrieb der Gasturbine verändert wird, indem der Massenstrom des weiteren Brennstoffs (2) verändert wird und der Massenstrom des Synthesegases (1) gleich bleibt.

2. Verfahren nach Anspruch 1, wobei als weiterer Brennstoff (2) Erdgas verbrannt wird.

3. Verfahren nach Anspruch 1, wobei als weiterer Brennstoff (2) Heizöl verbrannt wird.

## Claims

1. Method for stabilizing a grid frequency with a gas turbine that can be operated with syngas (1) and a further fuel (2), wherein the mass flow of the further fuel (2) that is provided for the operation of the gas turbine can be increased more quickly than that of the syngas (1), **characterized in that** a ratio of the mass flows of the syngas (1) to the further fuel (2) for the operation of the gas turbine is modified to stabilize a grid frequency, **in that** the mass flow of the further fuel (2) is modified and the mass flow of the syngas (1) remains the same.

2. Method according to Claim 1, wherein natural gas is burned as the further fuel (2).

3. Method according to Claim 1, wherein heating oil is burned as the further fuel (2).

## Revendications

1. Procédé de stabilisation d'une fréquence de réseau, comprenant une turbine à gaz, qui peut fonctionner avec du gaz (1) de synthèse et avec un autre combustible (2), dans lequel on peut augmenter plus rapidement le courant massique de l'autre combustible mis à disposition pour le fonctionnement de la turbine à gaz que celui du gaz (1) de synthèse, **caractérisé en ce que**, pour une stabilisation d'une fréquence du réseau, on modifie pour le fonctionnement de la turbine à gaz un rapport des courants massiques du gaz (1) de synthèse à l'autre combustible (2), en modifiant le courant massique de l'autre combustible (2) et en conservant le courant massique du gaz (1) de synthèse.

2. Procédé suivant la revendication 1, dans lequel on brûle du gaz naturel comme autre combustible (2).

3. Procédé suivant la revendication 1, dans lequel on brûle du mazout comme autre combustible (2).
